(19) Europäisches Patentamt
European Patent Office
Office européen des brevets

(11) Publication number: **0 156 617**
**A2**

(12) **EUROPEAN PATENT APPLICATION**

(21) Application number: 85301897.6

(22) Date of filing: 19.03.85

(51) Int. Cl.[4]: C 01 B 9/08
C 01 F 17/00, C 01 G 39/04
C 01 G 41/04, C 01 G 33/00
C 01 G 31/04, C 01 G 1/06
C 22 B 3/00

(30) Priority: 19.03.84 JP 51122/84
28.04.84 JP 85183/84
31.07.84 JP 159125/84

(43) Date of publication of application:
02.10.85 Bulletin 85/40

(84) Designated Contracting States:
DE FR GB IT

(71) Applicant: Solex Research Corporation of Japan
23-9, Maruyama-cho
Shibuya-ku Tokyo(JP)

(72) Inventor: Watanabe, Morio
8-23-22, Minamitsukaguchi-cho
Amagasaki-shi Hyogo-ken(JP)

(72) Inventor: Nishimura, Sanji
13-8, Fukakusa Nanmei-cho
Fushimi-ku Kyoto-shi Kyoto-fu(JP)

(74) Representative: Brewer, Leonard Stuart et al,
Sanderson & Co. 97 High Street
Colchester Essex CO1 1TH(GB)

(54) **Production of metal fluorides.**

(57) A metal fluoride whose metal is Mo, W, Nb, Ta, V, Re, Ti, Zr, Hf, Co, Ni, Cr, Sb, Sn, Zn, Cd, Pb, Al or a rare earth element is produced by heating a fluorine-containing ammonium salt of the metal, to convert it into the metal fluoride.

EP 0 156 617 A2

0156617

# PRODUCTION OF METAL FLUORIDES

The present invention relates to a process for producing metal fluorides, the metals being Mo, W, Nb, Ta, V, Re, Ti, Zr, Hf, Co, Ni, Cr, Sb, Sn, Zn, Cd, Pb, Aℓ and rare earth metals.

Hitherto, these metal fluorides have been prepared generally by reacting $F_2$ gas with purified metals as shown below:

$$Mo + 3F_2 \rightarrow MoF_6$$
$$W + 3F_2 \rightarrow WF_6$$
$$Nb + 2.5F_2 \rightarrow NbF_5$$
$$Ta + 2.5F_2 \rightarrow TaF_5$$
$$V + 2.5F_2 \rightarrow VF_5$$
$$Re + 3F_2 \rightarrow ReF_6$$
$$La + 1.5F_2 \rightarrow LaF_3$$
$$Ce + 1.5F_2 \rightarrow CeF_3$$
$$Nd + 1.5F_2 \rightarrow NdF_3$$
$$Sm + 1.5F_2 \rightarrow SmF_3$$
$$Eu + 1.5F_2 \rightarrow EuF_3$$
$$Gd + 1.5F_2 \rightarrow GdF_3$$
$$Tb + 2F_2 \rightarrow TbF_4$$
$$Tm + 1.5F_2 \rightarrow TmF_3$$
$$Lu + 1.5F_2 \rightarrow LuF_3$$
$$Y + 1.5F_2 \rightarrow YF_3$$
$$Sc + 1.5F_2 \rightarrow ScF_3$$
$$Ti + 2F_2 \rightarrow TiF_4$$
$$Zr + 2F_2 \rightarrow ZrF_4$$

$$Hf + 2F_2 \rightarrow HfF_4$$

$$Co + F_2 \rightarrow CoF_2$$

$$Ni + F_2 \rightarrow NiF_2$$

$$Cr + 1.5F_2 \rightarrow CrF_3$$

$$Sb + 1.5F_2 \rightarrow SbF_3$$

$$Cd + F_2 \rightarrow CdF_2$$

$$Sn + 2F_2 \rightarrow SnF_4$$

$$Zn + F_2 \rightarrow ZnF_2$$

$$Pb + F_2 \rightarrow PbF_2$$

$$A\ell + 1.5F_2 \rightarrow A\ell F_3$$

There is a further method for producing the metal fluorides, in which purified oxides of the metals react with $F_2$ gas. However, the fluorides produced by these methods are very expensive because of the high costs of the metals and metal oxides and the expensive $F_2$ gas.

The present invention provides an easier process for producing the metal fluorides. The process can produce high purity metal fluorides from naturally occurring mineral resources or industrial exhausts, instead of employing expensive raw materials. The invention overcomes difficulties of previous processes such as time-consuming operation and high costs.

Accordingly, the invention provides a process for producing a metal fluoride whose metal is Mo, W, Nb, Ta, V, Fe, Ti, Zr, Hf, Co, Ni, Cr, Sb, Sn, Zn, Cd, Pb, Aℓ or a rare earth element, which process comprises heating a fluorine-containing ammonium salt of the metal, to convert the salt into the

metal fluoride.

In a preferred procedure, the heating is carried out while the salt is in a stream of inert gas.

In another preferred procedure, the heating is carried out while the salt is in a stream of reducing gas.

The rare earth metals in this invention are lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), luthetium (Lu), yttrium (Y) and scandium (Sc).

The following equations illustrate starting materials, products and reactions according to the invention:

$$(NH_4)_2MoF_8 \rightarrow 2NH_4F + MoF_6$$

$$(NH_4)_2MoOF_6 \rightarrow 2NH_4F + \frac{1}{2}MoF_6 + \frac{1}{2}MoO_2 + \frac{1}{2}F_2$$

$$(NH_4)_2WF_8 \rightarrow 2NH_4F + WF_6$$

$$NH_4WOF_5 \rightarrow NH_4F + \frac{1}{2}WF_6 + \frac{1}{2}WO_2 + \frac{1}{2}F_2$$

$$(NH_4)_2NbF_7 \rightarrow 2NH_4F + NbF_5$$

$$(NH_4)_2NbOF_5 \rightarrow 2NH_4F + \frac{1}{2}NbF_5 + \frac{1}{2}NbO_2 + \frac{1}{4}F_2$$

$$(NH_4)_2TaF_7 \rightarrow 2NH_4F + TaF_5$$

$$NH_4VOF_4 \rightarrow NH_4F + \frac{1}{2}VF_4 + \frac{1}{2}VO_2 + \frac{1}{2}F_2$$

$$(NH_4)_2VOF_5 \rightarrow 2NH_4F + \frac{1}{2}VF_5 + \frac{1}{2}VO_2 + \frac{1}{4}F_2$$

$$(NH_4)_2ReF_6 \rightarrow 2NH_4F + ReF_4$$

$$(NH_4)_2LaF_5 \rightarrow 2NH_4F + LaF_3$$

$$(NH_4)_3CeF_6 \rightarrow 3NH_4F + CeF_3$$

$$(NH_4)_2NdF_5 \rightarrow 2NH_4F + NdF_3$$

$$(NH_4)_3SmF_6 \rightarrow 3NH_4F + SmF_3$$

$$(NH_4)_3EuF_6 \rightarrow 3NH_4F + EuF_3$$

$$
\begin{aligned}
(NH_4)_3GdF_6 &\rightarrow 3NH_4F + GdF_3\\
(NH_4)_2TbF_6 &\rightarrow 2NH_4F + TbF_4\\
NH_4TmF_4 &\rightarrow NH_4F + TmF_3\\
NH_4LuF_4 &\rightarrow NH_4F + LuF_3\\
NH_4YF_4 &\rightarrow NH_4F + YF_3\\
NH_4ScF_4 &\rightarrow NH_4F + ScF_3\\
(NH_4)_2TiF_6 &\rightarrow 2NH_4F + TiF_4\\
(NH_4)_2TiF_5 &\rightarrow 2NH_4F + TiF_3\\
(NH_4)_2ZrF_6 &\rightarrow 2NH_4F + ZrF_4\\
(NH_4)_3ZrF_7 &\rightarrow 3NH_4F + ZrF_4\\
(NH_4)_2HfF_6 &\rightarrow 2NH_4F + HfF_4\\
(NH_4)_3HfF_7 &\rightarrow 3NH_4F + HfF_4\\
(NH_4)_2CoF_4 &\rightarrow 2NH_4F + CoF_2\\
(NH_4)_2NiF_4 &\rightarrow 2NH_4F + NiF_2\\
(NH_4)_2SnF_6 &\rightarrow 2NH_4F + SnF_4\\
(NH_4)_3SbF_6 &\rightarrow 3NF_4F + SbF_3\\
(NH_4)_3CrF_6 &\rightarrow 3NH_4F + CrF_3\\
(NH_4)_2CdF_4 &\rightarrow 2NH_4F + CdF_2\\
(NH_4)_2PbF_4 &\rightarrow 2NH_4F + PbF_2\\
(NH_4)_2ZnF_4 &\rightarrow 2NH_4F + ZnF_2\\
(NH_4)_3A\ell F_6 &\rightarrow 3NH_4F + A\ell F_3
\end{aligned}
$$

There are other fluorine-containing ammonium salts suitable for the process. Industrially the salts may be impure crystals, and they are often in the form of a mixture or may be a mixture of salts of different valencies.

The composition of the fluorine-containing ammonium salts is not definite, or rather it differs

depending on how they have been formed, for instance depending on the aqueous solutions from which they have been isolated. Thus, the present invention is not restricted by the reaction formulae above.

In the present process, the fluorine-containing ammonium salt of the metal decomposes to the metal fluoride.

The present process is preferably conducted, especially in a stream of a reducing gas or of an inert gas, at a temperature of 150 to 1000°C in the case of fluorine-containing ammonium salts of Ti, Zr, Hf, Co, Ni, Cr, Sb, Cd, Sn, Zn, Pb and Aℓ and 150 to 600°C in the case of the others, the temperature being insufficient to cause metal formation.

The $NH_4F$ obtained by thermal decomposition, for instance in the stream of an inert or reducing gas, remains in a gaseous form at a higher temperature, but is solidified at a temperature below 200°C, so it can be removed for recovery from the decomposition gas by known methods such as separation by filtration. The $NH_4F$ recovered can be recirculated to the stage for producing the fluorine-containing ammonium salts of the metals.

The fluorine-containing ammonium salts of the metals can be prepared by extraction of ions of the metal from an organic solvent into an aqueous solution containing $F^-$ and $NH_4^+$ ions, such that the salts are formed in the aqueous solution. This technique can be, for instance, as shown below.

Ions (which can be simple and/or complex ions) of the metal, which ions have been extracted and contained in an organic solvent comprising at least one extracting agent selected from the group consisting of alkylphosphoric acids, alkyl aryl

phosphoric acids, ketones, carboxylic acids, neutral phosphoric acid esters, oximes, and primary through quaternary amines, which solvent may optionally contain a diluent especially petroleum hydrocarbon, are brought into contact with an aqueous solution containing both $F^-$ and $NH_4^+$ ions, to extract into the aqueous phase the metal in the form of its fluorine-containing ammonium salt. The organic solvent is thus regenerated. The metal ammonium fluorides can then be separated from the aqueous solution.

Typical equations representing the reactions involved are shown below:

$$R_6 \cdot Mo + 6NH_4HF_2 \rightleftharpoons (NH_4)_2MoF_8 + 6R \cdot H + 4NH_4F$$

$$H_2MoO_4 \cdot 2TBP + 3NH_4HF_2 \rightleftharpoons (NH_4)_2MoOF_6 + 2TBP + NH_4OH + 2H_2O$$

$$R_6 \cdot W + 6NH_4HF_2 \rightleftharpoons (NH_4)_2WF_8 + 6R \cdot H + 4NH_4F$$

$$R_3NH \cdot WO_3 + 2NH_4HF_2 \rightleftharpoons (NH_4)_2WOF_5 + 2R_3N + 2H_2O$$

$$H_2NbF_7 \cdot 2TBP + 4NH_4F + H_2O \rightleftarrows (NH_4)_2NbOF_5 + 2HF \cdot TBP + 2NH_4HF_2$$

$$H_2TaF_7 \cdot 2TBP + 2NH_4F \rightleftharpoons (NH_4)_2TaF_7 + 2TBP \cdot HF$$

$$R_4 \cdot V + 2NH_4HF_2 + H_2O \rightleftharpoons (NH_4)_2VOF_4 + 4RH$$

$$(R_3NH)VO_3 + 3NH_4HF_2 \rightleftharpoons (NH_4)_2VOF_5 + R_3N + NH_4F + 2H_2O$$

$$(R_3NH)_2ReO_3 + 3NH_4HF_2 \rightleftharpoons (NH_4)_2ReF_6 + 2R_3N + 2H_2O + NH_4OH$$

$$R_3La + 3NH_4HF_2 \rightleftharpoons (NH_4)_3LaF_6 + 3R \cdot H$$

$$R_3Ce + 3NH_4HF_2 \rightleftharpoons (NH_4)_3CeF_6 + 3R \cdot H$$

$$R_4Pr + 4NH_4HF_2 \rightleftharpoons (NH_4)_2PrF_6 + 4R \cdot H + 2NH_4F$$

$$R_3Nd + 3NH_4HF_2 \rightleftharpoons (NH_4)_3NdF_6 + 3R \cdot H$$

$$R_3Sm + 3NH_4HF_2 \rightleftharpoons (NH_4)_3SmF_6 + 3R \cdot H$$

$$R_3Eu + 3NH_4HF_2 \rightleftharpoons (NH_4)_3EuF_6 + 3R \cdot H$$

$$R_3Gd + 3NH_4HF_2 \rightleftharpoons (NH_4)_3GdF_6 + 3R \cdot H$$

$$R_3Tb + 3NH_4HF_2 \rightleftharpoons (NH_4)_3TbF_6 + 3R \cdot H$$

$$R_3Tm + 3NH_4HF_2 \rightleftharpoons (NH_4)_3TmF_6 + 3R \cdot H$$

$$R_3Lu + 3NH_4HF_2 \rightleftharpoons (NH_4)_3LuF_6 + 3R \cdot H$$

$$R_3Y + 3NH_4HF_2 \rightleftharpoons (NH_4)_3YF_6 + 3R \cdot H$$

$$R_3Sc + 3NH_4HF_2 \rightleftharpoons (NH_4)_3ScF_6 + 3R \cdot H$$

$$R_4Ti + 3NH_4HF_2 \rightleftarrows (NH_4)_2TiF_6 + 3R \cdot H + R \cdot NH_4$$

$$R_2TiO + 4NH_4HF_2 \rightleftarrows (NH_4)_2TiF_6 + 2R \cdot H + H_2O + 2NH_4F$$

$$R_3Ti + 3NH_4HF_2 \rightleftarrows (NH_4)_2TiF_5 + 3R \cdot H + NH_4F$$

$$R_4Zr + 4NH_4HF_2 \rightleftarrows (NH_4)_2ZrF_6 + 4R \cdot H + 2NH_4F$$

$$H_2ZrF_6 \cdot nTBP + 2NH_4F \rightleftarrows (NH_4)_2ZrF_6 + nTBP + 2HF$$

$$(R_3NH)_2ZrO(SO_4)_2 + 6NH_4F \rightleftarrows (NH_4)_2ZrOF_4 + 2R_3NH \cdot F + 2(NH_4)_2SO_4$$

$$R_2Co + 2NH_4HF_2 \rightleftarrows (NH_4)_2CoF_4 + 2R\cdot H$$

$$R_2Ni + 2NH_4HF_2 \rightleftarrows (NH_4)_2NiF_4 + 2R\cdot H$$

$$R_3Cr + 3NH_4HF_2 \rightleftarrows (NH_4)_3CrF_6 + 3R\cdot H$$

$$(R_3NH)SbO_2 + 3NH_4HF_2 \rightleftarrows (NH_4)_3SbF_6 + R_3N + 2H_2O$$

$$R_2Cd + 2NH_4HF_2 \rightleftarrows (NH_4)_2CdF_4 + 2R\cdot H$$

$$(R_3NH)_2SnO_3 + 4NH_4HF_2 \rightleftarrows (NH_4)_2SnF_6 + 2R_3N + 3H_2O + 2NH_4F$$

$$R_2Zn + 2NH_4HF_2 \rightleftarrows (NH_4)_2ZnF_4 + 2R\cdot H$$

$$R_2Pb + 2NH_4HF_2 \rightleftarrows (NH_4)_2PbF_4 + 2R\cdot H$$

$$R_3Al + 3NH_4HF_2 \rightleftarrows (NH_4)_3AlF_6 + 3R\cdot H$$

In the equations, R·H represents an H-type extractor, and TBP represents tributyl phosphate.

The simple metal ions and complex metal ions transferred to the aqueous phase are converted into corresponding fluorine-containing ammonium salts of the metal, which are less soluble than other fluorides of the metal in aqueous solutions and much more rapid in the rate of crystal growth. Consequently, the fluorine-containing ammonium compounds thus formed are readily separated, usually by filtration.

The metal ammonium fluorides thus obtained are heated as described above, preferably in a stream of an inert or reducing gas. Fluorides of the metals are thus produced, preferably at a temperature from 150 to 600°C or 150 to 1000°C as described above.

$NH_4F$ or $NH_4HF_2$ gas generated from the decomposition can be very easily recovered through an absorption or dust collection process. The recovered gas can be recycled to the stage for

producing the metal ammonium fluorides.

The alkylphosphoric acids which can be employed as extracting agent in the present invention are preferably selected from the group consisting of the following compounds:

(a)

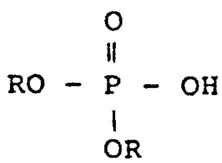

(b)

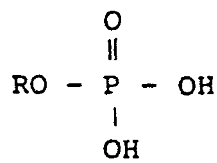

(c)

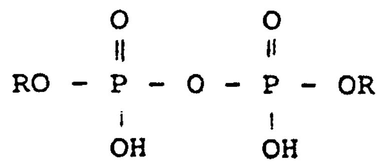

(d)

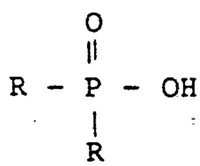

or

(e)

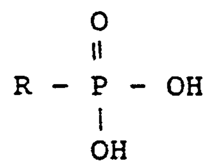

(In the formulae, R represents an alkyl group generally containing 4 to 22 carbon atoms).

The compound $D_2EHPA$ (di-2-ethylhexylphosphoric acid) referred to in the Examples below is the compound of group (a) where R represents $C_8H_{17}$.

An example of the oxime which can be employed as extracting agent has the formula:

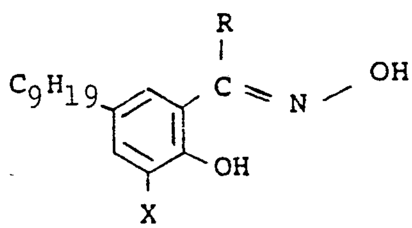

(In the formula, R represents H, $CH_3$, 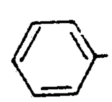 or 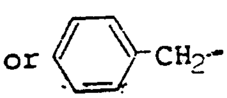 and X represents Cℓ or H).

Oximes similar to the above are also useful. A mixture of two or more oximes such as LIX64N (tradename of Henkel Chemicals) may be used. SME-529 appearing in the Example below is a tradename of Shell Chemicals for the oxime of the formula above where R represents $CH_3$ and X represents H.

The ketone which can be employed as extracting agent is preferably of formula:

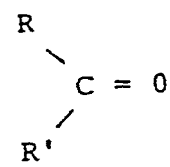

(In the formula, R and R' represent alkyl or aryl groups and usually contain 3 to 22 carbon atoms).

An Example of the ketone is cyclohexanone or the compound of formula:

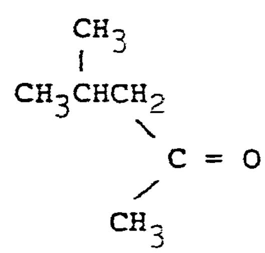

The alkyl aryl phosphoric acid which can be employed as extracting agent is preferably of formula:

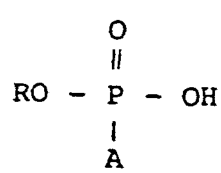

(In the formula, R represents an alkyl group containing 4 to 15 carbon atoms, and A represents an aryl group, for instance a phenyl, tolyl or xylyl group).

OPPA (octyl phenyl phosphoric acid) used in the Examples has this formula in which R represents $C_8H_{17}$ and A represents $C_6H_5$.

The carboxylic acid employed as extracting agent is preferably of formula:

(a)

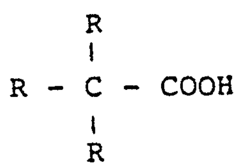

or

(b)

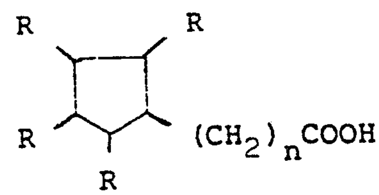

(In the formulae, R represents an alkyl group having in general 4 to 22 carbon atoms).

The compound V-10 (Versatic-10, tradename of Shell Chemicals) employed in the Examples is of this formula (a) where the alkyl group contains 9 to 15 carbon atoms.

The neutral phosphoric acid esters employed as extracting agents are preferably selected from the following groups:

(a)

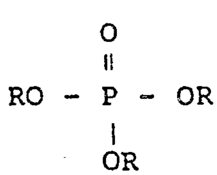

(b)

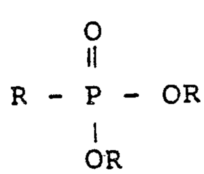

(c)

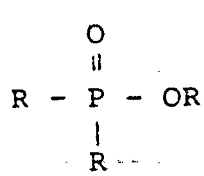

or

(d)

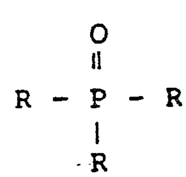

(In the formulae, R represents an alkyl group having 4 to 22 carbon atoms).

TBP (tributyl phosphate) employed in the Examples is of formula (a) where R represents $C_4H_9$.

Primary through quaternary amines employed as extracting agents are preferably selected from the following groups:

Primary amines $RNH_2$, where R represents an alkyl group having 4 to 25 carbon atoms.

Secondary amines $R_2N-$ or $R_2NH$, where R represents an alkyl group having 4 to 25 carbon atoms.

Tertiary amines $R_3N$ or $R_3NH-$, where R represents an alkyl group having 4 to 25 carbon atoms.

Quaternary amines

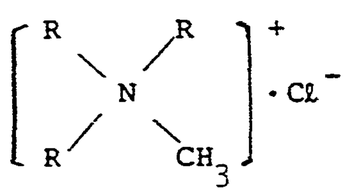

(In the formula, R represents an alkyl group having 4 to 25 carbon atoms).

TOA (Trioctylamine) employed in the Examples has the formula:

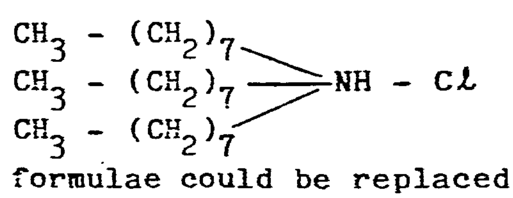

(However, Cℓ in the formulae could be replaced by another anion).

The diluents which can be employed in this invention may be for instance petroleum hydrocarbons, aromatic or aliphatic hydrocarbons, or a mixture

thereof. Kerosine, a mixture of various hydrocarbons, may even be used. The extracting agents can be selected from a multiplicity of compounds and may be used alone or in a mixture. The selection and the mixing ratio of the extracting agents depend on the nature of the aqueous solution to be employed and the nature and proportion of suspected impurities. Concentrations of extracting agent can be similarly determined, but usually a concentration ranging from 2 to 100% (by volume) is preferred.

The $F^-$ ion containing solution which can be employed in the present invention contains one or more species selected from the group consisting of $NH_4HF_2$ and $NH_4F$, optionally plus HF. The solution preferably contains a mole ratio of $F^- : NH_4^+$ of from 1 : 1 to 1 : 0.2. The solution may contain a reducing agent such as hydrazine, depending on the conditions for crystallization.

The inert gas which can be employed in the present invention can be for example argon, helium or nitrogen, either alone or in the form of a mixture of gases.

The reducing gas which can be employed in the present invention can be for example hydrogen, carbon monoxide or hydrocarbon vapour.

The invention is illustrated by but not restricted to the accompanying drawings, in which:

Fig. 1 is a flow sheet illustrating the basic process of the invention; and

Fig. 2 is a flow sheet illustrating the production of the starting material.

Referring to Fig. 1, the fluoride (D) of the present metal is produced from a metal ammonium fluoride (A) of the metal by heating the metal ammonium fluoride to a temperature between 150 and 600°C or between 150 and 1000°C in a stream of an inert or reducing gas (C) in the heating decomposition

stage (B).

The gas produced in the heating and decomposition stage (B) contains $NH_4F$, which is solidified by cooling, and separated in the separation stage (E) by a known method, to obtain metal fluoride (D). The recovered $NH_4F$ is recirculated to the stage in which the metal ammonium fluoride is produced.

Referring to Fig. 2, an organic solvent (F) which extracts and contains simple or complex ions of the present metal is brought into contact with an aqueous solution (G) containing $NH_4^+$ and $F^-$ ions in the stripping stage (H), to transfer the simple and complex metal ions into the aqueous phase and to regenerate the organic solvent for circulation to the extraction stage. The simple and complex ions of the present metal contained in the aqueous phase are separated in the crystallization stage (J), to obtain crystals of the metal ammonium fluoride.

The invention is illustrated by the following Examples.

Example 1

Each of the samples shown in Table 1 were placed in an annular electric furnace and heated in a nitrogen stream flowing at a rate of 3 cc/min.

Example 2

Each of the samples shown in Table 2 were placed in an annular electric furnace and heated in a nitrogen stream flowing at a rate of 0.3 ℓ/minute.

The residues shown in the Table are considered to have been formed by hydrogen bonding in part of the crystals due to the presence of $NH_4ZrF_6OH_2$ or $NH_4HfF_6OH_2$. The residues were identified as oxides. The volatile matters were determined by identifying the condensate obtained by cooling.

The "none" in the residue weight column means that all of the crystalline sample volatilized.

Example 3

Each of the sample shown in Table 3 were placed in an annular electric furnace and heated in a nitrogen stream flowing at a rate of 0.3 ℓ/minute. The volatile matters and the condensates in the Table were determined by maintaining the gas coming out of the system at about 230°C and separating $NH_4F$ and $NH_4HF_2$ by utilizing the differences in vapour pressure.

Example 4

The metal ammonium fluorides employed as starting material in the present invention may be prepared by known methods of extraction and stripping using the organic solvents and the stripping solutions as listed in Tables 4 to 6.

In the Tables, the concentration of organic solvents is expressed in percentages by volume.

The rate of stripping is the percentage of the substance which is transferred into the aqueous phase by a single contact when equal volumes of aqueous and organic phases are used. The stripping was conducted in each case at a temperature between 25 and 28°C, and the shaking continued for 10 minutes.

The materials formed were examined by X-ray diffraction analysis or chemical analysis.

MIBK means methyl isobutyl ketone.

Table 1

| Sample | Weight | Temperature of heating | Residue Formula | Residue Weight | Volatile matter Formula | Volatile matter Weight |
|---|---|---|---|---|---|---|
| $NH_4MoOF_5$ | 10 g | 350°C | $MoO_2$ | 2.8 g | $MoF_6 + NH_4F$ | 4.6 g |
| $NH_4WOF_5$ | " | 300°C | $WO_2$ | 3.4 g | $WF_6 + NH_4F$ | 4.8 g |
| $(NH_4)_2NbOF_5$ | " | 450°C | $NbO_2F$ | 3.2 g | $NbF_5 + NH_4F$ | 4.2 g |
| $(NH_4)_2TaF_7$ | " | 250°C | none | 0 g | $TaF_5 + NH_4F$ | 7.9 g |
| $(NH_4)_2VOF_4$ | " | 400°C | $VO_2$ | 2.3 g | $VF_4 + NH_4F$ | 3.5 g |
| $(NH_4)_2ReF_6$ | " | 280°C | $ReF_4$ | 7.8 g | $NH_4F$ | 2.2 g |
| $(NH_4)_3LaF_6$ | " | 420°C | $LaF_3$ | 6.3 g | " | 3.7 g |
| $(NH_4)_3NdF_6$ | " | 450°C | $NdF_3$ | 6.4 g | " | 3.6 g |
| $(NH_4)_3SmF_6$ | " | 400°C | $SmF_3$ | 6.5 g | " | 3.5 g |
| $(NH_4)_3EuF_6$ | " | 300°C | $EuF_3$ | 6.5 g | " | 3.5 g |
| $(NH_4)_3GdF_6$ | " | 350°C | $GdF_3$ | 6.6 g | " | 3.4 g |
| $(NH_4)_3TmF_6$ | " | 400°C | $TmF_3$ | 6.7 g | " | 3.3 g |
| $(NH_4)_3TbF_6$ | " | 250°C | $TbF_3$ | 6.6 g | " | 3.4 g |
| $(NH_4)_3YF_6$ | " | 450°C | $YF_3$ | 5.7 g | " | 4.4 g |

Remarks:

In Table 1, the substances left in the ring furnace after heating are identified and listed by their formula and weight in the "Residue" column, and the "Volatile matters" which were cooled and identified are listed in the 6th and 7th columns. The "none" in the residue column means that complete evaporation occurred leaving nothing. The "0" in the "weight" column means that no residue could be recovered.

Table 2

| Sample | Weight | Temperature of heating | Residue | | Volatile matter | |
|---|---|---|---|---|---|---|
| | | | Formula | Weight | Formula | Weight |
| $(NH_4)_2TiF_6$ | 30 g | 400°C | $TiF_4$ | 18.8 g | $NH_4F$ | 11.2 g |
| $(NH_4)_2ZrF_6$ | 30 g | 500°C | $ZrF_4$ | 20.5 g | $NH_4F$ | 9.5 g |
| $(NH_4)_2HfF_6$ | 30 g | 500°C | $HfF_4$ | 23.1 g | $NH_4F$ | 6.9 g |

Table 3

| Sample | Weight | Temperature of heating | Residue | | Volatile matter | |
|---|---|---|---|---|---|---|
| | | | Formula | Weight | Formula | Weight |
| $(NH_4)_2CoF_4$ | 30 g | 500°C | $CoF_2$ | 17 g | $NH_4F$ | 13 g |
| $(NH_4)_2NiF_4$ | 30 g | 500°C | $NiF_2$ | 17 g | $NH_4F$ | 13 g |
| $(NH_4)_3CrF_6$ | 30 g | 800°C | $CrF_3$ | 14.9 g | $NH_4F$ | 15.1 g |
| $(NH_4)_3SbF_6$ | 30 g | 500°C | (Condensate 18.5 g) | 0 g | $SbF_3$ + $NH_4F$ | 30 g |
| $(NH_4)_2CdF_4$ | 30 g | 500°C | $CdF_2$ | 20.1 g | $NH_4F$ | 9.9 g |
| $(NH_4)_2SnF_6$ | 30 g | 500°C | (Condensate 21.7 g) | 0 g | $SnF_4$ + $NH_4F$ | 30 g |
| $(NH_4)_2ZnF_4$ | 30 g | 500°C | $ZnF_2$ | 17.5 g | $NH_4F$ | 12.5 g |
| $(NH_4)_2PbF_4$ | 30 g | 600°C | $PbF_2$ | 23 g | $NH_4F$ | 7 g |
| $(NH_4)_3AlF_6$ | 30 g | 800°C | $AlF_3$ | 12.9 g | $NH_4F$ | 17.8 g |

Table 4

| Metal | Organic solvent | Stripping solution | Rate of stripping | Example of product |
|---|---|---|---|---|
| Mo | 60% TBP + 40% isoparaffin | 100 g/ℓ $NH_4HF_2$ | 99.5% | $(NH_4)_2MoOF_6$ |
| W | 10% TOA + 90% isoparaffin | 150 g/ℓ $NH_4HF_2$ | 99.8% | $NH_4WOF_5$ |
| Nb | 100% MIBK | 100 g/ℓ $NH_4F$ | 99.1% | $(NH_4)_2NbOF_5$ |
| Ta | 85% TBP + 15% aromatics | 100 g/ℓ $NH_4F$ | 99.8% | $(NH_4)_2TaF_5$ |
| V | 30% $D_2EHPA$ + 70% n-paraffin | 200 g/ℓ $NH_4F$ | 99.1% | $(NH_4)_2VOF_4$ |
| Re | 80% TBP + 20% isoparaffin | 150 g/ℓ $NH_4F$ | 99.8% | $(NH_4)_3ReF_7$ |
| La | 30% $D_2EHPA$ + 70% isoparaffin | 200 g/ℓ $NH_4HF_2$ | 92.7% | $(NH_4)_3LaF_6$ |
| Nd | 30% V-10 + 70% isoparaffin | 150 g/ℓ $NH_4HF_2$ | 94.1% | $(NH_4)_3NdF_6$ |
| Sm | 30% V-10 + 70% isoparaffin | 150 g/ℓ $NH_4HF_2$ | 94.8% | $(NH_4)_3SmF_6$ |
| Eu | 30% $D_2EHPA$ + 70% n-paraffin | 200 g/ℓ $NH_4HF_2$ | 92.8% | $(NH_4)_3EuF_6$ |
| Gd | 30% $D_2EHPA$ + 70% n-paraffin | 200 g/ℓ $NH_4HF_2$ | 93.3% | $(NH_4)_3GdF_6$ |
| Tm | 30% $D_2EHPA$ + 70% n-paraffin | 200 g/ℓ $NH_4HF_2$ | 94.1% | $(NH_4)_3TmF_6$ |
| Tb | 30% $D_2EHPA$ + 70% isoparaffin | 200 g/ℓ $NH_4HF_2$ | 98.4% | $(NH_4)_3TbF_6$ |
| Y | 65% TBP + 35% isoparaffin | 150 g/ℓ $NH_4F$ | 99.8% | $(NH_4)_3YF_6$ |

Table 5

| Metal | Organic solvent | Stripping solution | Rate of stripping | Example of product |
|---|---|---|---|---|
| Ti | 30% $D_2EHPA$ + 70% isoparaffin | 150 g/ℓ $NH_4HF_2$ | 99.1% | $(NH_4)_2TiF_6$ |
| Ti | 30% V-10 + 70% n-paraffin | 100 g/ℓ $NH_4HF_2$ | 99.9% | $(NH_4)_2TiF_6$ |
| Zr | 10% TOA + 90% aromatic hydrocarbon | 100g/ℓ $NH_4F$ | 99.4% | $(NH_4)_2ZrF_6$ |
| Zr | 60% TBP + 40% isoparaffin | 180 g/ℓ $NH_4F$ | 99.6% | $(NH_4)_2ZrF_6$ |
| Hf | 100% MIBK | 200 g/ℓ $NH_4F$ | 94.7% | $(NH_4)_2HfF_6$ |

Table 6

| Metal | Organic solvents containing extracted metal values | Stripping solution | Rate of stripping | Example of product |
|---|---|---|---|---|
| Co | 20%OPPA+5%SME-529 +7.5% kerosine | 100g/ℓ $NH_4HF_2$ | 99.1% | $(NH_4)_2CoF_4$ |
| Ni | 30%$D_2$EHPA + 70% isoparaffin | 100g/ℓ $NH_4HF_2$ | 99.9% | $(NH_4)_2NiF_4$ |
| Cr | 30%$D_2$EHPA + 70% kerosine | 300g/ℓ $NH_4F$ | 56.1% | $(NH_4)_2CrF_6$ |
| Sb | 20%TBP + 80% isoparaffin | 200g/ℓ $NH_4HF_2$ | 99 % | $(NH_4)_3SbF_6$ |
| Sn | 20%TOA + 80% kerosine | 100g/ℓ $NH_4F$ | 98.9% | $(NH_4)_2SnF_6$ |
| Pb | 30%V - 10 + 70% n-paraffin | 100g/ℓ $NH_4F$ | 99.4% | $(NH_4)_2PbF_4$ |
| Cd | 30%$D_2$EHPA + 70% aromatic | 150g/ℓ $NH_4HF_2$ | 99.8% | $(NH_4)_2CdF_4$ |
| Zn | 30%SME-529 + 70% kerosine | 150g/ℓ $NH_4F$ | 99.2% | $(NH_4)_2ZnF_4$ |
| Aℓ | 30%OPPA + 70% isoparaffin | 100g/ℓ $NH_4HF_2$ | 99.6% | $(NH_4)_3AℓF_6$ |

CLAIMS

1. A process for producing a metal fluoride whose metal is Mo, W, Nb, Ta, V, Re, Ti, Zr, Hf, Co, Ni, Cr, Sb, Sn, Zn, Cd, Pb, Aℓ or a rare earth element, which process comprises heating a fluorine-containing ammonium salt of the metal, to convert the salt into the metal fluoride.

2. A process according to claim 1 wherein the heating of the fluorine-containing ammonium salt of the metal is carried out while the salt is in a stream of inert gas.

3. A process according to claim 1 wherein the heating of the fluorine-containing ammonium salt of the metal is carried out while the salt is in a stream of reducing gas.

4. A process according to any one of the preceding claims wherein the metal fluoride is $MoF_6$, $WF_6$, $NbF_5$, $TaF_5$, $VF_4$, $VF_5$, $ReF_4$, $LaF_3$, $CeF_3$, $NdF_3$, $SmF_3$, $EuF_3$, $GdF_3$, $TbF_4$, $TmF_3$, $LuF_3$, $YF_3$, $ScF_3$, $TiF_4$, $TiF_3$, $ZrF_4$, $HfF_4$, $CoF_2$, $NiF_2$, $SnF_4$, $SbF_3$, $CrF_3$, $CdF_2$, $PbF_2$, $ZnF_2$ or $A\ell F_3$.

5. A process according to any one of the preceding claims wherein the rare earth element is yttrium or scandium.

6. A process according to any one of the preceding claims wherein the metal is Ti, Zr, Hf, Co, Ni, Cr, Sb, Cd, Sn, Zn, Pb or Aℓ and the heating is at a temperature of 150 to 1000°C.

7. A process according to any one of claims 1-5 wherein the metal is Mo, W, Nb, Ta, V, Re or a rare earth element and the heating is at a temperature of 150 to 600°C.

8. A process according to any one of the preceding claims wherein the fluorine-containing ammonium salt of the metal is produced by bringing

an organic solvent containing simple or complex ions of the metal into contact with an aqueous solution containing $F^-$ and $NH_4^+$ ions to extract into the aqueous phase the metal in the form of its fluorine-containing ammonium salt, the organic solvent comprising at least one extracting agent selected from the group consisting of alkylphosphoric acids, alkyl aryl phosphoric acids, carboxylic acids, oximes, ketones, neutral phosphoric acid esters, and primary, secondary, tertiary and quaternary amines.

9. A process according to claim 8 wherein the solvent comprises the extracting agent diluted with petroleum hydrocarbon.

10. A process according to claim 8 or 9 wherein the heating produces $NH_4F$ or $NH_4HF_2$ which is recycled for use in the aqueous solution.

FIG.1

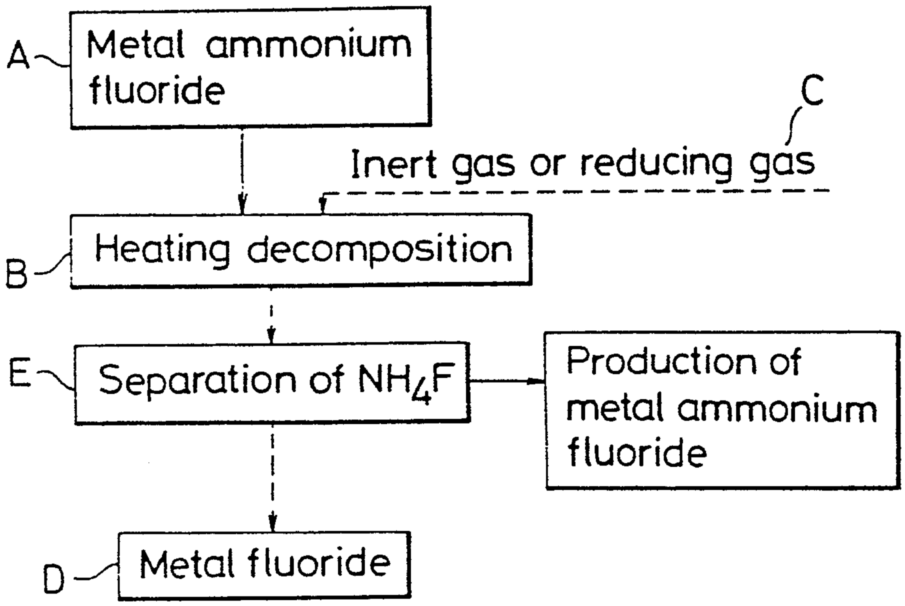
A
Metal ammonium fluoride
C
Inert gas or reducing gas
B
Heating decomposition
E
Separation of NH4F
Production of metal ammonium fluoride
D
Metal fluoride

FIG.2

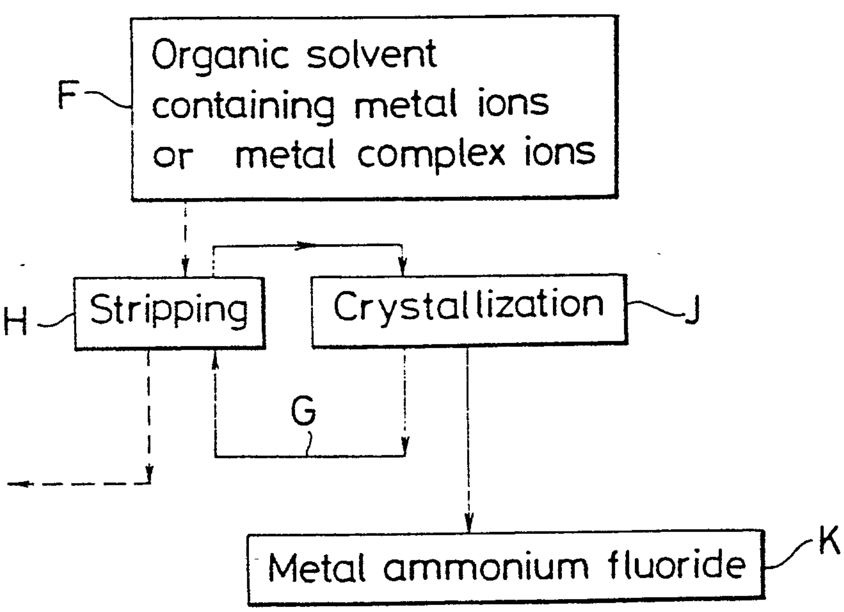
F
Organic solvent containing metal ions or metal complex ions
H
Stripping
Crystallization
J
G
Metal ammonium fluoride
K